# EUROPÄISCHE PATENTSCHRIFT

(11) **EP 2 364 466 B1**
(45) Veröffentlichungstag und Bekanntmachung des Hinweises auf die Patenterteilung: **03.04.2013**
(21) Anmeldenummer: 09778901.0
(22) Anmeldetag: 03.12.2009
(51) Int. Cl.: G05B 19/418, G07C 3/14, B25B 23/14

(54) **INTEGRIERTES LEIT- UND KONTROLLSYSTEM FÜR FERTIGUNGS- UND QUALITÄTSSICHERUNGSPROZESSE IN PRODUKTIONSLINIEN MIT BEARBEITUNGSSTATIONEN UND/ODER WERKZEUGEN**
INTEGRATED GUIDE AND CONTROL SYSTEM FOR PRODUCTION AND QUALITY ASSURANCE PROCESSES IN PRODUCTION LINES HAVING MACHINING STATIONS AND/OR TOOLS
SYSTÈME DE COMMANDE ET DE CONTRÔLE INTÉGRÉ POUR DES PROCESSUS DE FABRICATION ET D'ASSURANCE DE QUALITÉ DANS DES LIGNES DE PRODUCTION AVEC POSTES DE TRAITEMENT ET/OU OUTILS

(30) Priorität: 10.12.2008 DE 102008061495
(43) Veröffentlichungstag der Anmeldung: 14.09.2011
(73) Patentinhaber: Atlas Copco Industrial Technique AB (Sweden), 131 54 Nacka (SE)
(72) Erfinder: BÖHM, Heribert, 84163 Marklkofen/Poxau (DE); BÖHM, Christian, 84163 Marklkofen/Poxau (DE)
(74) Vertreter: Schmidt, Steffen
(86) Internationale Anmeldenummer: PCT/EP2009/008644
(87) Internationale Veröffentlichungsnummer: WO 2010/066375

(56) Entgegenhaltungen:
- EP-A2- 1 068 931
- DE-A1-102004 021 536
- US-A1- 2007 268 154

## Beschreibung

Hier wird ein Leit- und Kontrollsystem für Fertigungs- und Qualitätssicherungsprozesse in Produktionslinien mit Bearbeitungsstationen und / oder Werkzeugen beschrieben. Ein Fertigungsprozess kann dabei ein Montagevorgang, oder eine Betriebsstoffbefüllungsvorgang, sowie Mess- und Prüfvorgang, oder dergl. sein. Die Bearbeitungsstationen und / oder Werkzeuge sind zum Beispiel Schraub-, Klebe-, Niet- oder Clipsanlagen, oder auch Messgeräte zur Qualitätssicherung wie Drehmomentschlüssel, Drehwinkelmessschlüssel, Wegmesstaster, Druckmessgeräte, oder Geräte zur Messung anderer physikalischer oder elektrischer Größen. Das Leit- und Kontrollsystem dient hierbei dazu, die Prozesse in den Produktionslinien zu steuern und / oder zu regeln.

### Hintergrund und Stand der Technik

Die Atlas Copco Tools Central Europe GmbH bietet Systeme an, die z.B. ein drehmoment-oder drehwinkelgesteuertes Abschalten, ein Überwachen der Bedienung inklusive Zykluskontrolle gegen vergessene Schrauben sowie das Überwachen der Verbindung selbst erlaubt. Wie weit Anziehparameter über- oder unterschritten werden, zeigen die Informationssysteme z.B. auch an dem Impulsschrauber an. Mit dem Kleinschrauber Tensor SL der Atlas Copco Tools Central Europe GmbH lassen sich sicherheits- und funktionskritische Verbindungen dokumentierbar anziehen. Weiterhin werden Akkuschrauber mit einer Bluetooth-Funkschnittstelle zur Qualitätssicherung angeboten. Über Funk werden Prozesssignale wie i.O. und n.i.O., (N.i.O. = Nicht in Ordnung), (i.O. = in Ordnung) aber auch die gemessenen Drehmoment und Drehwinkelwerte, die Anzahl der erledigten Verschraubungen sowie die Schraubzeiten an eine Prozess-Steuerung geleitet. Die Prozess-Steuerung kann die ausgeführten Verschraubungen zählen und das Förderband einer Produktionslinie zum Beispiel für einen Takt freigeben.

Im Rahmen industrieller Fertigung in Produktionslinien mit Bearbeitungsstationen und/oder Werkzeugen werden so bereits heute durch unterschiedliche Prozesse Ergebnisdaten von Produktionsüberprüfungen oder Qualitätskontroiimaßnahmen generiert und in verschiedenen Datenbanken zusammengeführt. Durch die Vielzahl der Prozesse und Daten ist eine Auswertung nur mit hohem Personalaufwand möglich. Hersteller, also Betreiber der Produktionslinien, müssen daher auf eine gesamtheitliche Bewertung der Prozesse verzichten und beschränken sich in der Regel auf Einzelaktionen bei auftretenden Abweichungen, die zufällig oder erst beim Anwender des Produktes erkannt werden.

Eine statistische Prozesskontrolle (SPC) zum vollständigen Abdecken einer Produktionslinie kann in der Praxis nicht durchgeführt werden, da sie mit den bestehenden Systemen einen wirtschaftlich nicht vertretbaren Aufwand bedeutet. Im Ergebnis gibt es keine flächendeckende Auswertung von laufenden Prozessen einer Produktionslinie. Diese Situation führt dazu, dass in der Produktionsrealität bei Fehlern im Produktionsprozess oft keine oder nur verspätete Korrekturmaßnahmen eingeleitet werden können.

Derzeit verfügbare Systeme zur Qualitätssteuerung sind, wie oben dargestellt, Einzelsysteme oder Insellösungen, die Prozessdaten verarbeiten oder Prüfdaten betrachten und sammeln. Gesammelte Informationen sind jedoch im Problemfall vom Anwender manuell abzurufen, zu beurteilen und abzugleichen. Das ist wirtschaftlich nicht darstellbar, da mit derzeit verfügbaren Systemen zur Qualitätssteuerung mehr Personal für die durchgängige Datenauswertung notwendig wäre als für den Produktionsprozess.

Zum Beispiel offenbart das Dokument DE 10 2004 021 536 A1 ein Verfahren und eine Vorrichtung zum Herstellen von Schaubverbindungen. Dabei werden Leerverschraubungen anhand des Vergleichs des erfassten Drehmoments mit einem Solldrehmoment erfasst und gezählt. Die von einer Auswerteschaltung ermittelten und bewerteten Daten werden an eine externe Überwachungseinheit übertragen und in einer Auswerteeinheit der Überwachungseinheit mit Grenzwerten verglichen und ausgewertet. Bei Nichterfüllung der Grenzwertkriterien sendet die Auswerteeinheit ein Signal an den Abschaltschrauber mit dem über die Steuereinrichtung die Stromzufuhr im Abschaltschrauber unterbrochen wird.

Hinzu kommt, dass Messgeräte unterschiedlicher Hersteller wegen mangelnder Kompatibilität der Übertragungsprotokolle nur sehr eingeschränkt direkt und zeitnah untereinander Informationen auszutauschen in der Lage sind. Auch dies behindert eine gesamtheitliche Betrachtung des Produktionsprozesses unter Qualitätsgesichtspunkten.

In der Automobilindustrie als Leitindustrie wird in der Regel mit drei Risikoklassen (nach der VDI / VDE 2862) gearbeitet: sicherheits-, funktions- und anwenderkritische Verbindungen. Einige Fahrzeughersteller unterscheiden lediglich zwischen Schraubverbindungen, die aus Gründen der Produkthaftung dokumentiert werden, und solchen, die nicht dokumentiert werden.

Für derartige kritische Schraubverbindungen genügt nicht nur, dass alle N.i.O.-Verschraubungen entdeckt werden. Auch die Zykluskontrolle, also das Zählen der i.O.-Verschraubungen reicht nicht aus. Alle sicherheitskritischen Schraubfälle sind mit ihren Anziehwerten - Drehmoment und Winkel - zu dokumentieren. Neben der vollständigen Dokumentation der Anziehwerte erfolgt zur Prozesssicherung auch eine Rückmeldung an den das Schraubwerkzeug handhabenden Werker oder die Bearbeitungsstation. Dazu dienen Leuchtmittel am Schraubwerkzeug. Sie zeigen an, ob die Verschraubung innerhalb der Soll-Werte erfolgte (= i. O.) oder fehlerhaft ist (= n. i. O.). Die Steuerungen von Bearbeitungsstationen oder von Schraubwerkzeugen verfügen zur Prozessüberwachung über integrierte SPC-Software-Werkzeuge für statistische Auswertungen, Prozessdiagramme, Schraubkurven und Schraubfallanalysen. In einer weitergehenden Prozesssicherheitsstufe sind alle Schraubwerkzeuge an Handarbeitsplätzen und an automatischen Montagestationen eingebettet in den ständigen Datenaustausch mit einem übergeordneten Produktionsleit- und -steuersystem.

Datenaustausch in Fertigungsanlagen über Netzwerke erlaubt es, einzelne Schraubfälle in einer Montagelinie zu erfassen. Dazu werden auch Schraubwerkzeuge mit eigenen Sensoren und IP-Adresse (Internet Protocol-Adresse) eingesetzt, die dann die Möglichkeit eines Datenabgleichs von Werk zu Werk bieten. Wenn sich zum Beispiel Fehlverschraubungen in einem Werk häufen, kann ermittelt werden, ob diese ausschließlich die Produktionslinie

dieses Werkes betreffen oder auch die Parallelfertigung in anderen Werken. So können mögliche Ursachen, z.B. ein neu angeliefertes Schraubenlos oder problematische Schraubwerkzeugeinstellungen eingegrenzt werden.

So werden zum Beispiel in dem Produktionsleit- und Steuerungssystem PLUS von Daimler sog. Tensor-Schraubwerkzeuge von Atlas Copco Tools Central Europe GmbH in der Fahrzeugfertigung eingesetzt. Diese Schraubwerkzeuge an Handarbeitsplätzen und automatischen Montagestationen sind mit einem übergeordneten Steuer- und Leitsystem im Datenaustausch. Das Produktionsleit- und Steuerungssystem übermittelt hier die schraubfallspezifischen Solldaten an die Schraubwerkzeuge und erhält nach dem Schraubvorgang die entsprechende Rückmeldung.

### Zugrundeliegendes Problem

Auf dem Markt derzeit verfügbare Systeme zur Erfassung und Visualisierung der Prozessdaten bieten jedoch keine im Produktionsalltag einsetzbare Möglichkeit, alle relevanten Prozesse einer Produktionslinie so zeitgerecht und vollständig automatisiert zu betrachten, ggf. einzugreifen und einen Prozessverantwortlichen so zu informieren, dass Fehler oder Trendabweichungen noch während der Produktion mit wirtschaftlich vertretbarem Aufwand erkannt und abgestellt werden können.

### Lösung

Vorgeschlagen wird ein Kontroll- und Leitsystem nach Anspruch 1

Von dem Kontroll- und Leitsystem werden nach der automatischen Aufbereitung der Messdaten eine Vielzahl von Prozessinformationen wie z.B. Fehlerinformation oder Mitarbeiterführungen sowie Informationen zur Qualitätssteuerung zurück an das jeweilige Messdatenerfassungssystem aller Bearbeitungsstationen und/oder Werkzeuge der Produktionslinie gegeben.

Je nach Visualisierungsmöglichkeit an den Bearbeitungsstationen und/oder Werkzeugen der Produktionslinie wirkt das Messdatenerfassungssystem dann als Mitarbeiterführungssystem.

Die Folge davon ist, dass die Messerfassungssysteme in Zukunft nur geringe Speicherkapazitäten und Rechnerkapazitäten benötigen. Auch entfallen Softwarepakete zur Messdatenaufbereitung, -visualisierung sowie zur Speicherung und statistischen Berechnung. Die Messdatenerfassungssysteme können dadurch günstiger hergestellt werden.

Ein solches System bietet überdies unter Anderem folgende Vorteile:
- Gezieltere Betriebsmittelauswahl (Werkzeug, Messmittel) für die Produktionslinie;
- Erhöhte Produkt-Qualität bei geringerem Mess-Aufwand;
- Erhöhte Produkt-Ausbringungsrate durch weniger Nacharbeit;
- Erhöhte Transparenz aller Fertigungsvorgänge; und
- Steigerung der Produktivität, verringerte Produktionskosten.

Das System erlaubt die Vereinfachung der Qualitätssteuerung von Fertigungsprozessen. Die erfassten Messwerte werden online, d.h. in Echtzeit (weniger als etwa 10 - 100 Millisekunden) oder in Nahezu-Echtzeit (innerhalb etwa 0,1- 10 Sekunden, in der Regel etwa 1 Sekunde) erfasst, verarbeitet und entsprechende Reaktionen eingeleitet. Durch diese kurze Reaktionszeit und basierend auf der vollständigen Betrachtung früher erfasster Messwerte sowie aktueller Messwerte kann in die Fertigung noch zu einem Zeitpunkt eingegriffen werden, zu der das fragliche Produkt noch in der Produktionslinie ist. Dies reduziert die Kosten. Das System kann automatische Bewertungen vornehmen und einzuleitende Maßnahmen online anordnen. Alle Maßnahmen / Aktionen können automatisch dokumentiert und in einem Meldesubsystem generiert werden.

Wesentliche Aspekte sind dabei die online Steuerung aiier überwachten Prozesse der Produktionslinie, die Aufwandreduzierung bei den Qualitätsmaßnahmen, die unmittelbare Einleitung von Korrekturmaßnahmen, sowie kurzfristige Reaktionen bei auftretenden Trendabweichungen. Weiterhin ist es möglich, Prüffolgen zu dynamisieren, d.h. den Abstand zwischen zwei oder mehreren Prüfungsmaßnahmen bezogen auf fehlerbehaftete Prozesse in Abhängigkeit von den Messwerten aus der laufenden Fertigung zu verändern (zu verlängern wenn der Prozess beherrscht und im gewünschten Toleranzband stabil ist, oder zu verkürzen, z. B. wenn der Prozess aus dem gewünschten Toleranzband herauswandert). Die Folge davon sind auch die Reduzierung von Prüfungs- / Instandhaltungskosten durch aufwandsbezogene Reaktion. Schließlich kann das System zielgerichtet Informationen im Bereich Qualitätssteuerung und Instandhaltung sowie Produktqualität zur Verfügung stellen, was den Aufwand für die Auswertung gegenüber der manuellen Auswertung um ein Vielfaches reduziert.

Die Klassifizierungs- und Auswertungs-Programmkomponente dient dazu, die erfassten Messwerte der wenigstens einen Messgröße in Bezug zu benutzerdefinierten und für die jeweilige Bearbeitungsstationen oder Werkzeuge benutzerdefinierten spezifischen Regeln zu setzen.

Die benutzerdefinierten spezifischen Regeln sind aus einer vorgegebenen Klasse von Regeln auswählbar und veränderbar. Dazu können in jeder der Regeln ein oder mehrere Prozess-Parameter zu einem ersten Prozess-Einflussfaktor verknüpft sein. Weiterhin können in jeder der Regeln ein oder mehrere Prozess-Bewertungsfaktoren zu einem zweiten Prozess-Einflussfaktor verknüpft sein. Außerdem können in jeder der Regeln ein oder mehrere Wertebereiche festgelegt sein, in die ein oder mehrere der Messwerte nach ihrem Eintreffen in der Auswertungsstation einzuordnen sind. Schließlich können in jeder der Regeln eine oder mehrere Prozessbeeinflussungs- oder Prozessbenachrichtigungsmaßnahmen festgelegt sein, die in Abhängigkeit von jeweils erfassten Messwerten abzugeben sind.

Die Klassifizierungs- und Auswertungs-Programmkomponente verknüpft gemäß den spezifischen Regeln die erfassten Messgrößen mit den ersten und/oder zweiten Prozess-Einflussfaktoren, und ermittelt, in welchen der Wertebereiche ein oder mehrere erfasste Messwerte einzuordnen sind, um abhängig von der Wertebereichseinordnung oder eine Wertebereichs-übertretung oder Wertebereichsgrenzenüberschreitung eine oder mehrere entsprechende Nachrichten mit jeweiligen abgeleiteten Prozessbeeinflussungs- oder Prozessbenachrichtigungsmaßnahmen an die jeweilige Bearbeitungsstation oder das jeweilige Werkzeug und/oder die Bearbeitungsstation abzugeben.

Die Prozess-Parameter können Konstanten umfassen, wie
- Sollwerte etwa in Form von Drehmoment, Drehwinkel, Länge, oder Füllstand,
- Toleranzen der Sollwerte,
- Prüfparameter etwa in Form von Drehmoment, Drehwinkel, Länge, Füllstand,
- Materialkonstanten etwa in Form von Reibwert, Härte, Dimensionen, E-Modul,
- Prüf-Häüfigkeit, und/oder
- Werkzeugtyp in Form von Art, Ausführungtyp, oder dessen Funktionsweise.

Die Prozess-Bewertungsfaktoren können Faktoren umfassen, wie
- Risiko-Klassifizierung etwa in Form von Bedeutung der Fertigungsstelle,
- Know-How-Daten, und/oder
- Risiko-Potential in Form von Rest-Risiko.

Die Wertebereiche können Bereiche umfassen, wie Aktionsbereiche, in denen Messgrößen liegen können, wie einen In-Ordnung-Bereich, einen oder mehrere Meldungsbereiche, einen oder mehrere Warnbereiche, einen Über-In-Ordnung-Bereich, einen oder mehrere Dehnungs-, Zerstörungs-, und / oder Verformungsbereiche, einen Unter-In-Ordnung-Bereich, einen oder mehrere im Toleranzbereich oberhalb des Sollwerts liegende Bereiche, und/oder einen oder mehrere im Toleranzbereich unterhalb des Sollwerts liegende Bereiche.

Die Prozessbenachrichtigungs- und/oder Prozessbeeinflussungsmaßnahmen können
- eine oder mehrere Trendmeldungen, wonach der Fertigungsvorgang sich verändert aber noch in Ordnung ist;
- eine oder mehrere Meldungen von sporadischen Ausreißern der Messwerte;
- eine oder mehrere Meldungen zur Einzelkontrolle und/oder zur Nacharbeit am Produkt;
- eine oder mehrere Meldungen zum Anpassen des Prüfintervall am Produkt oder an den Bearbeitungsstationen und/oder Werkzeugen;
- Instandhaltung/Wartung/Austausch des Betriebsmittels veranlassen bevor n.i.O.-Produkte die Produktionslinie verlassen;
- Umfassende Überprüfung der noch nicht verbauten Bauteile veranlassen;
- Stopp der Produktionslinie;
- Auslieferungsstopp der betroffenen Charge veranlassen;
- Ein oder mehrere Ersatzteile für die Bearbeitungsstationen und/oder Werkzeuge oder das Produkt anliefern;
umfassen.

Die Prozessbeeinflussungs- oder Prozessbenachrichtigungsmaßnahmen können auch
- eine Rückmeldung an die jeweilige Bearbeitungsstation oder das jeweilige Werkzeug;
- eine elektronische Nachricht an eine Kontrollstation;
- ein Abschaltsignal an die Produktionslinie; und/oder
- Veränderungen der Regeln;
umfassen.

Die Kommunikationsstrecke zwischen Bearbeitungsstation oder dem Werkzeug und der Auswertungsstation kann eine drahtlose und/oder kabelgebundene Kommunikationsstrecke sein.

Schließlich kann der Auswertungsstation eine Visualisierungs-Programmkomponente zum automatischen Anzeigen im Montagevorgang erfasster Messgrößen zugeordnet ist, wobei solche Parameter im Bezug auf eine oder mehrere Montagestellen angezeigt werden, die durch die Klassifizierungs- und Auswertungs-Programmkomponente als ein Kriterium erfüllend erkannt werden.

Damit bietet das System auch die Möglichkeit, Prozesse online zu visualisieren und direkt eine Qualitätskontrolle für den Gesamtprozess zu ermöglichen, solange das Produkt noch nicht die Produktionslinie verlassen hat.

Dieses System ersetzt einen großen Teil der bestehenden, auf SPC basierenden (Insel-) Systeme zur Qualitätsüberwachung durch ein Qualitätsregelsystem mit minimaler Totzeit.

Alle in das System eingebundenen Bearbeitungsstationen und / oder Werkzeuge sind mit einem Messdatenerfassungssystem ausgerüstet und online über kabellose Übertragungssysteme (z.B. Bluetooth, IRDA oder WLAN) oder über eine direkte Kabelverbindung (z.B. Ethernet, Factory-Bus, Feldbus, oder ein sonstiges Netzwerk) erfolgen.

Die Bearbeitungsstationen und / oder Werkzeuge mit den Messdatenerfassungsystemen sind zum Beispiel Schraub-, Klebe-, Niet- oder Clipsanlagen, oder auch Messgeräte zur Qualitätssicherung wie Drehmomentschlüssel, Schrauberprüfstationen, Druckmessgeräte, oder Geräte zur Messung anderer physikalischer oder elektrischer Größen. Da die Speicherung und Aufbereitung der erfassten Messwerte in der zentralen Auswertungsstation mit Datenprozessor und Datenspeicher erfolgt, können die Speicher- / Verarbeitungsressourcen auf der Seite der Messdatenerfassungsysteme der Bearbeitungsstationen und / oder Werkzeuge minimal sein. Außerdem können auch zukünftige Messdatenerfassungssysteme so gestaltet sein, dass sie keinerlei Verwaltung oder Aufbereitung von Messdaten lokal auf dem Messgerät vornehmen. Alle Messdaten werden sofort nach der Aufnahme der Messwerte (online) über einen oben beschriebenen Kommunikationsweg an das System abgegeben.

Lediglich bei einem möglichen offline Betrieb (wenn kurzzeitig keine Möglichkeit zur Online-übertragung der Messwerte besteht) ist eine ausreichende Zwischenpufferung auf dem Messdatenerfassungssystem zu gewährleisten.

Die Kommunikation ist - zum Schließen des Regelkreises aller Fertigungs- und Qualitätssicherungsprozesse - stets bidirektional aufgebaut.

In den Abbildungen wird anhand eines Schraubprozesses sowie den zugehörigen qualitätssichernden Maßnahmen der Regelkreis des Leit- und Kontrollsystems für Fertigungs- und Qualitätssicherungsprozesse in Produktionslinien veranschaulicht. Selbstverständlich ist das Verfahren auch an anderen Prozessen in einer Produktionslinie verwendbar.

### Kurzbeschreibung der Zeichnungen

Fig. 1 zeigt eine schematische Darstellung einer Produktionslinie, in der das Leit- und Kontrollsystem für Fertigungs- und Qualitätssicherungsprozesse in Produktionslinien mit Bearbeitungsstationen und / oder Werkzeugen veranschaulicht ist.
Fig. 2 zeigt schematisch einen Server der Auswertungsstation, in dem mehrere Computersoftware-Programmkomponenten ausgeführt werden.
Fig. 3 zeigt eine Klassifizierungs- und Auswertungs-Programmkomponente als Ablaufdiagramm.
Fig. 4 zeigt das Zustandekommen der Regeln gemäß denen Messwerte zu klassifizieren und auszuwerten sind, als Ablaufdiagramm im Überblick.
Fig. 5 zeigt das Zustandekommen der Regeln gemäß denen Messwerte zu klassifizieren und auszuwerten sind, als Ablaufdiagramm im Detail.
Fig. 6 zeigt die einzelnen Klassifizierungsbereiche und -grenzen, innerhalb denen erfasste Messwerte liegen können, sowie die daraus resultierende Klassifizierung in einem schematischen Beispiel.
Fig. 7 zeigt schematisch die einzelnen Klassifizierungsbereiche und -grenzen und entsprechend zugeordnete Entscheidung
Fig. 8 veranschaulicht schematisch, wie und welche erste und zweite Prozess-Einflussfaktoren zusammen mit in Regeln festgelegten Wertebereichen verknüpft werden, wobei in diese Wertebereiche die Messwerte eingeordnet oder kategorisiert sind.
Fig. 9 veranschaulicht schematisch, welche statistischen Prozesskontroll-Regeln in das Regelwerk des vorliegenden Systems integriert sind.

### Detaillierte Beschreibung des Systems

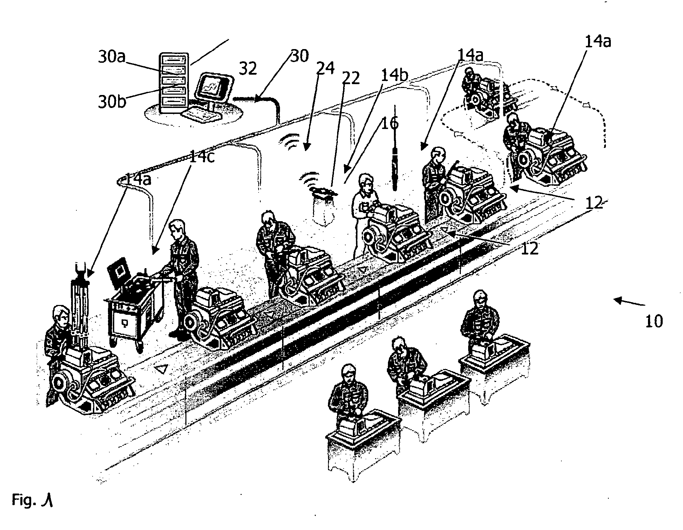

Fig. 1 zeigt eine Produktionslinie 10, an der Produkte 12 mittels Werkzeugen 14 montiert werden. Die Produktionslinie 10 ist mit einem Kontroll- und Leitsystem für Fertigungs- und Qualitätssicherungsprozesse ausgestattet. Dazu haben die Werkzeuge Messdatenerfassungssysteme mit einem Sensor 16 zur Erfassung von beim Schraubvorgang auftretenden Drehmoment-Messwerten an einem der Produkte 12. Die erfassten Drehmoment-Messwerte werden über einen Sender / Empfänger 22 an den Werkzeugen unmittelbar nach deren Erfassen über eine Kommunikationsstrecke 24 an eine Auswertungsstation 30 gesendet. Der Auswertungsstation 30 ist ebenfalls ein Sender / Empfänger 32 zugeordnet. Dieser Sender / Empfänger 32 zum Empfangen von Rückmeldungen von der Auswertungsstation. Außerdem hat die Auswertungsstation 30 einen Datenprozessor 30a und einen Datenspeicher 30b. Die Auswertungsstation 30 ist als Server ausgestaltet, der ggf. über nicht gezeigte weitere Datenverbindungen mit anderen (ggf. auch hierarchisch übergeordneten) Rechnern des Produktionsbetriebes zur Datenkommunikation eingerichtet ist.

Die Messwerte kommen aus unterschiedlichen Datenquellen/Datensenken: Eine erste Datenquelle/Datensenke ist das oben erwähnte Werkzeug, z.B. ein Elektroschrauber 14a; eine zweite Datenquelle/Datensenke ist zum Beispiel ein Drehmoment-Prüfschlüssel 14b zur Erfassung der Prozessqualität; eine dritte Datenquelle/Datensenke ist ein Prüfgerät 14c zur Erfassung der Maschinenfähigkeit. Mit der zweiten Datenquelle/Datensenke zur Erfassung der Prozessqualität werden die Produktionsschritte mehrerer Fertigungswerkzeuge - dem unmittelbaren Fertigungsvorgang zeitlich nachgeordnet - kontrolliert. Die dritte Datenquelle/Datensenke kann ein Prüfgerät zur Erfassung der Maschinenfähigkeit sein, welches die Funktion / Präzision der Werkzeuge - von dem unmittelbaren Fertigungsvorgang zeitlich losgelöst - kontrolliert. Hinsichtlich der Datenerfassung / Datenübertragung und - Kommunikation mit der Auswertungsstation 30 verhalten sich die drei Datenquellen/Datensenken 14a, 14b, 14c vergleichbar. Sie können also Daten sowohl aussenden als auch empfangen, wobei die Kommunikation drahtlos oder kabelgebunden erfolgen kann.

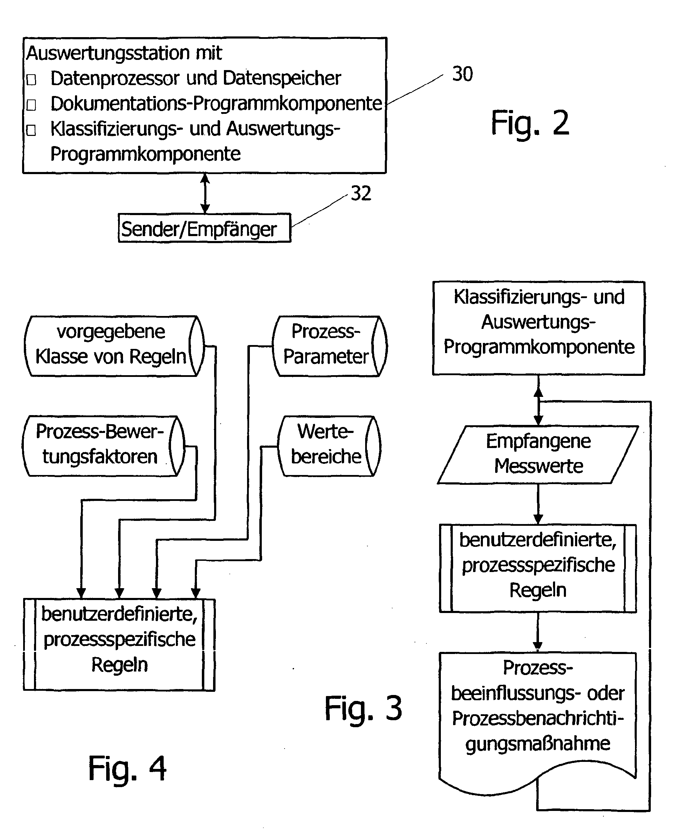

In dem Server der Auswertungsstation 30 werden mehrere Computersoftware-Programmkomponenten ausgeführt (siehe Fig. 2). Eine Dokumentations-Programmkomponente dient dazu, die im Qualitätssicherungs- oder Fertigungsvorgang erfassten Messwerte strukturiert zu dokumentieren und nach einer festgelegten Struktur abzulegen. Eine Klassifizierungs- und Auswertungs-Programmkomponente (siehe Fig. 3) dient dazu, unmittelbar nach dem Empfang der Messwerte über die Kommunikationsstrecke zumindest in Nahezu-Echtzeit diese zu klassifizieren und auszuwerten und um abhängig von deren Klassifizierung und Auswertung wenigstens eine Prozessbeeinflussungs- oder Prozessbenachrichtigungsmaßnahme abzuleiten. Durch diese Computersoftware-Programmkomponenten werden alle Messdaten verarbeitet und bewertet. Außerdem werden vollautomatisch für die jeweilige Bearbeitungsstelle im Qualitätssicherungs- oder Fertigungsvorgang Informationen erstellt / Aktionen ausgelöst.

Der bereits erwähnte ein Sender/Empfänger 32 dient dazu, in Nahezu-Echtzeit über die Kommunikationsstrecke entsprechende Nachrichten mit der jeweiligen abgeleiteten Prozessbeeinflussungs- oder Prozessbenachrichtigungsmaßnahme an die jeweilige Bearbeitungsstation oder das jeweilige Werkzeug und/oder eine Kontrollstation abzugeben.

Eine Kernbereich der Klassifizierungs- und Auswertungs-Programmkomponente ist die Vorgabe der Regeln, wonach über die Kommunikationsstrecke in der Auswertungsstation 30 empfangene Messwerte zu klassifizieren und auszuwerten sind, um abhängig von deren Klassifizierung und Auswertung die Prozessbeeinflussungs- oder Prozessbenachrichtigungsmaßnahmen abzuleiten (siehe Fig. 4).

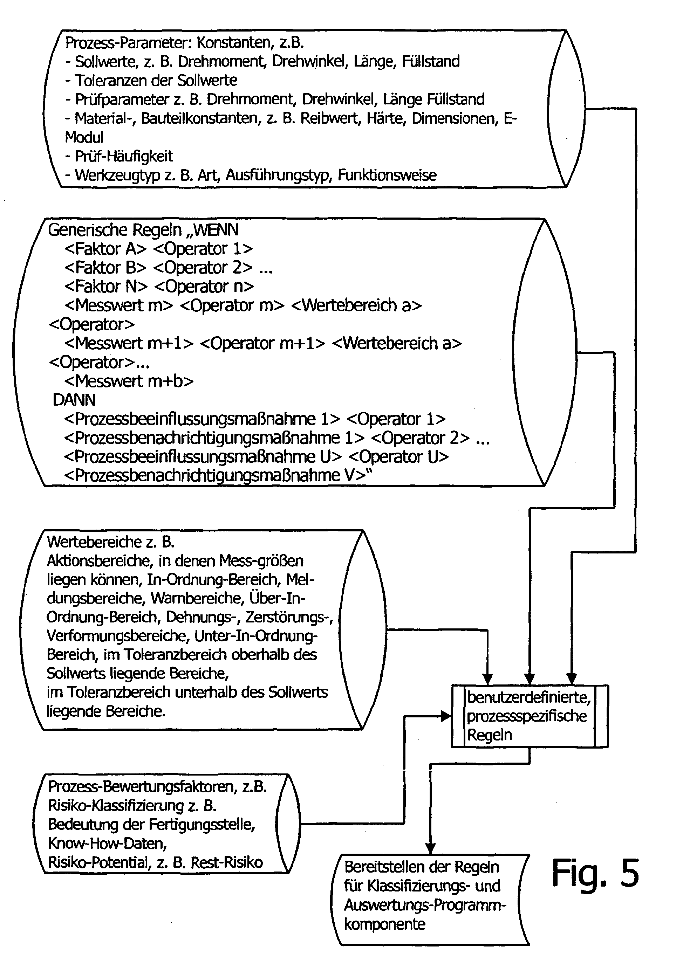

Dazu wird als erster - vorbereitende - Schritt (siehe Fig. 5) für jede Fertigungsstelle, für jedes Werkzeug, oder für jede Bearbeitungsstation der Produktionslinie eine oder mehrere spezifische Funktionsregeln im Dialog mit der Klassifizierungs- und Auswertungs-Programmkomponente festgelegt. Dazu wird jede der Regeln - in generischer Form - aus einer vorgegebenen Klasse von Regeln ausgewählt und benutzerdefiniert verändert. Diese generischen Regeln haben eine

```
                                           "WENN
                                  <Faktor A> <Operator 1>
 <Faktor B> <Operator 2> ...
 <Faktor N> <Operator n>
 <Messwert m> <Operator m> <Wertebereich a> <Operator>
 <Messwert m+1> <Operator m+1> <Wertebereich a> <Operator> ...
 <Messwert m+b>
 DANN
 <Prozessbeeinflussungsmaßnahme 1> <Operator 1>
 <Prozessbenachrichtigungsmaßnahme 1> <Operator 2> ...
 <Prozessbeeinflussungsmaßnahme U> <Operator U>
 <Prozessbenachrichtigungsmaßnahme V>"
```

Struktur. Dabei sind die Faktoren A, B ... N Prozess-Parameter, die verknüpft werden. Die Messwerte m ... m+b sind dabei der aktuelle sowie die b zurückliegenden Messwerte. Die Betrachtung einer Anzahl zurückliegender Messwerte dient der Erfassung von Trends, denen der Prozess unterliegt.

Es ist jedoch auch möglich, einen ersten und/oder einen zweiten Prozess-Einflussfaktor aus einem oder mehreren Prozess-Parametern bzw. aus einem oder mehreren Prozess-Bewertungsfaktoren durch deren jeweiliges Verknüpfen zu ermitteln.

Diese ersten und/oder zweiten Prozess-Einflussfaktoren können dann zusammen mit einem oder mehreren, in Regeln festgelegten, Wertebereichen verknüpft werden. In diese Wertebereiche sind die Messwerte nach ihrem Eintreffen in der Auswertungsstation eingeordnet oder kategorisiert.

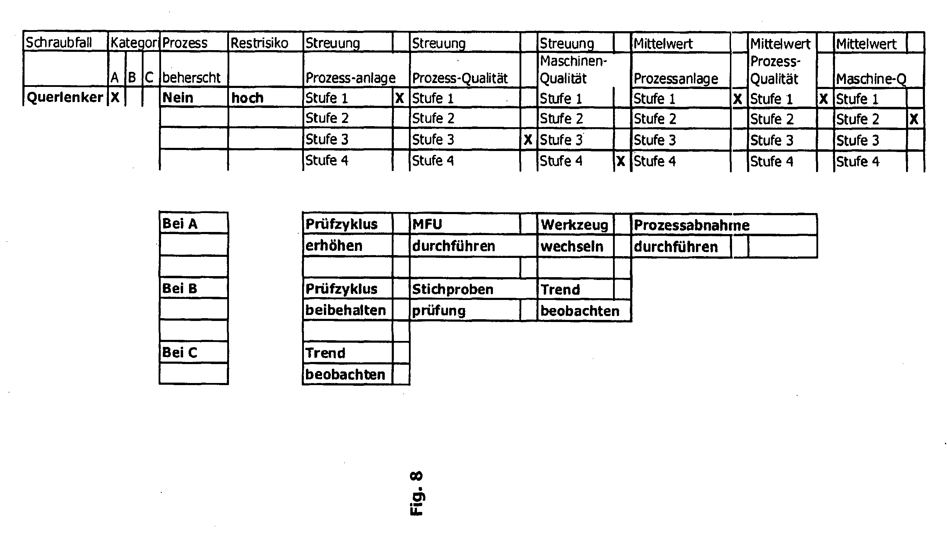

Dies ist in Fig. 8 exemplarisch veranschaulicht. Hierbei ist gezeigt, wie die einzelnen Faktoren bestimmt werden und welche Prozessbeeinflussungsmaßnahmen zu ergreifen bzw. welche Prozessbenachrichtigungsmaßnahmen abzuleiten sind. Hier erfolgt auch unter den Einflussfaktoren Kategorie, Prozess, und Restrisiko eine weitere Gewichtung, indem - zum Beispiel dialoggeführt oder aus Datenbanken - Abfragen zu den einzelnen Faktoren zusammengeführt um zum jeweiligen Prozess-Einflussfaktor verknüpft zu werden.

Es können in den Regeln auch Grenzen festgelegt sein, bei deren Erreichen, Überschreiten oder Unterschreiten in den Regeln festzulegende Aktionen / Meldungen erfolgen.

Während des Produktionsvorgangs verknüpft die Klassifizierungs- und Auswertungs-Programmkomponente gemäß den spezifischen Regeln die erfassten Messgrößen mit den ersten und/oder zweiten Prozess-Einflussfaktoren, und ermittelt, in welchen der Wertebereiche ein oder mehrere erfasste Messwerte einzuordnen sind, um abhängig von der Bereichseinordnung eine oder mehrere entsprechende Nachrichten mit jeweiligen abgeleiteten Prozessbeeinflussungs- oder Prozessbenachrichtigungsmaßnahmen an die jeweilige Bearbeitungsstation oder das jeweilige Werkzeug und/oder die Kontrollstation abzugeben.

So werden durch den Nutzer Informations-, Warn- oder Aktionsgrenzen mit unterschiedlichen Benennungen und Bedeutungen als Regelgrundlagen festgelegt. Diese Grenzen sind für die Erzeugung von Aktionen oder Informationen immer mit einer hinterlegten Funktion verknüpft. Der Bediener entscheidet für jede Fertigungsstelle / Werkzeug / Anforderungen in seinem Betrieb, etc. wie viele Grenzbereiche zu setzen sind.

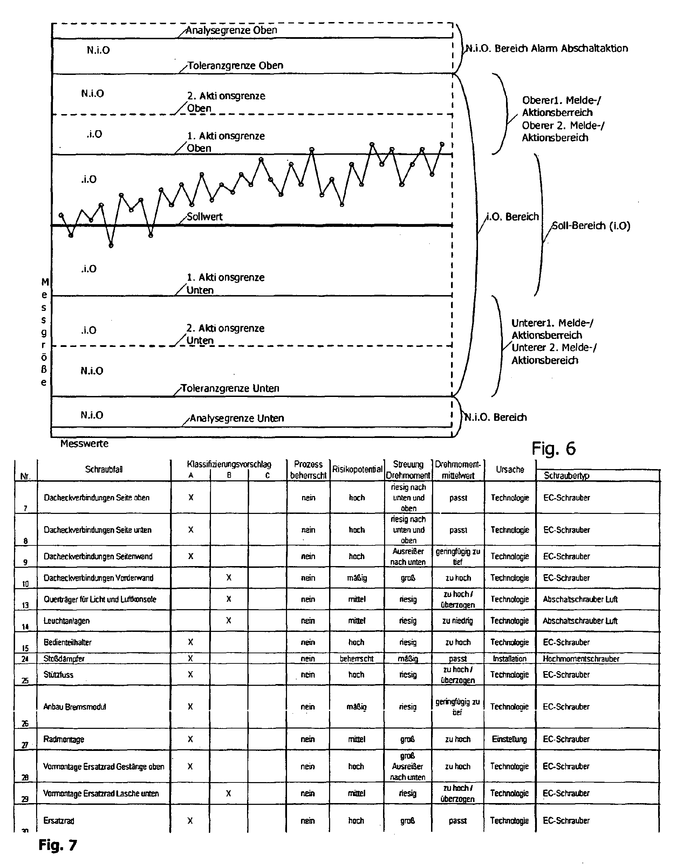

Für alle verwendeten Messgrößen wird der Gesamtwertebereich in Teilbereiche aufgegliedert (siehe Fig. 6). Die Größe und Abstände der Grenzen der Bereiche entscheidet der Bediener.

In den Regeln kann jeder Bereich mit einer Funktion verknüpft werden. Wie in der Fig. 6 als Beispiel dargestellt, sind Bereiche definiert, die nach Festlegung durch den Nutzer Informations- bzw. Aktionscharakter haben. Jedem Bereich kann eine Entscheidung zugeordnet werden. (Siehe hierzu auch Fig. 7).

Durch die Regeldefinitionen sind die Abläufe frei zu konfigurieren. Jede Entscheidung kann nach Häufigkeiten oder zeitlichen Auftreten als Information oder Aktion gesetzt werden.

Beispiele hierfür sind:
WENN n Messwerte (n > = < a) der letzten m Messwerte oberhalb der p. Aktionsgrenze (p = 1 ... x) liegen, UND n Messwerte liegen unterhalb der oberen Toleranzgrenze, DANN Meldung an Qualitätsverantwortlichen, dass der Prozess sich außerhalb der zuvor festgelegten Toleranzen bewegt UND Verkürzen des Prüfintervalls, UND Meldesignal an Werkzeug.
WENN n Messwerte (n > = < a) der letzten m Messwerte oberhalb der Toleranzgrenze liegen, ODER n Messwerte unterhalb der oberen Analysegrenze liegen, DANN Alarm an Qualitätsverantwortlichen, dass der Prozess sich außerhalb der zuvor festgelegten Toleranzen bewegt UND Maschinenprüfung anstoßen und Prozessuntersuchung durchführen, UND Meldesignal an Werkzeug.
WENN ein Messwert über der Analysegrenze liegt, DANN Prozess stoppen UND Alarm an Qualitätsverantwortlichen, dass Schaden an Werkzeug oder Bauteil vorliegt, UND Maschinenprüfung anstoßen UND Prozessuntersuchung durchführen.

Das System beruht darauf, die auflaufenden Messdaten aus Prozessanlagen und Messdatenerfassungssystemen bezogen auf eine definierte Quelle automatisch über einen Kommunikationsweg zu sammeln. Diese Messdaten werden nach der oben beschriebenen Logik sofort aufbereitet (berechnet). Hieraus wird automatisch eine definierte Aktionsanweisung generiert, die ggf. zu einem sofortigem Prozesseingriff führt.

Nach Wunsch des Anwenders kann auch nach einem vorher definierten Zeitintervall eine versetzte Berechnung gewählt werden.

Bei bestehenden Systemen zur Prozessauswertung oder zur Qualitätssicherung im Vergleich zur oben dargestellten Logik werden Messdaten übertragen und auf manuelle Anwahl des Anwenders hin visualisiert. Dieses hat zur Folge, dass korrigierende Maßnahmen nur zeitversetzt und zufällig möglich sind.

Bei dem vorliegenden System entfallen nach der Einrichtung der Regeln alle zur Qualitätssteuerung notwendigen manuellen Programmbedienungen und Entscheidungen.

Im Regelsystem sind auch statistische Regeln (z.B. ist ein Wert außerhalb der Eingriffgrenze .... usw.) integriert. Das vorliegende System bietet ein die automatische Berechnung und Integration der statistischen Regeln und die daraus abgeleiteten automatischen Aktionsmeldungen.

Das System erzeugt Aktionsmeldungen, die dann bedingungslos abgearbeitet werden, wenn es der Prozess erfordert. Alle Aktionen werden automatisch dokumentiert mit Quittierfunktion und Freigabesystem in einem Archivierungssystem nachvollziehbar festgehalten.

Drei Risikoklassen werden unterschieden: sicherheits-, funktions- und anwenderkritische Verbindungen. Eine andere Einteilung in Risikoklassen sind (Schraub-)verbindungen, die aus Gründen der Produkthaftung zu dokumentieren sind, und solchen, die nicht zu dokumentieren sind.

Der Regelprozess beginnt mit der Bestimmung des Risikopotentials einer Schraubstelle, die den Regeiprozess mit unterschiedlichen Prioritäten und Aktionen belegt. Das Risikopotential der jeweiligen Schraubstelle wird unter Zugrundelegung unterschiedlicher Faktoren bewertet. Einige Faktoren, die dabei zu betrachten und zu verknüpfen sind, können sein: Anwendung der VDI / VDE 2862, Auswirkungen bei Versagen der Schraubstelle, Eingesetzte Technologie, Eingesetzte Prozessabsicherung, Risikopotential im Montageablauf, Konstruktionsmängel, Bauteilefehler etc.

Im Zusammenwirken mit den anderen Regeln wird je nach Wichtigkeit der Montageoperation und des Risikopotentials eine Aktionsmeldung zum Prozesseingriff erstellt.

Die erfassten Messdaten werden sofort online übertragen und dann in die vorher festgelegten Bereiche klassifiziert. Aus dem jeweiligen Bereich wird in Verbindung mit dem Risikopotential eine vorher festgelegte Prozessregelaktion eingeleitet.

Bei bestehenden SPC Systemen wird nicht eine Bewertung nach Bereichen durchgeführt. Vielmehr muss der Qualitätsverantwortliche eine Interpretation des Prozesses vornehmen und dann eine mögliche Prozessteuerung aus seiner Erfahrung sich erarbeiten, was eine langjährige Erfahrung und eine detaillierte Kenntnis des jeweiligen Prozesses bedeutet.

Das vorgestellte System liefert eine automatische Bewertung. Je nach Risikoklassifizierung erfolgt diese Bewertung nach einer Einzelwertbeurteilung oder einer Langzeitbetrachtung von Messwerten aus der Vergangenheit. Die Lage der Messwerte (Einzel- und Langzeitwerte) in Verbindung mit den Aktionsstufen führt dann zu Informations- oder Aktionsmeldungen. Dabei werden unter Anderem folgende Faktoren berücksichtigt: Messwerte, deren Lage der Messwerte in den jeweiligen Klassifizierungsbereichen, Mittelwert der bisherigen Messwerte, Anzahl der Messwerte, Streuung der Messwerte, Aktionsgrenzen, oder Aktionsbereiche, Aktionsfeldbedeutung, Risikoeinschätzung, etc.

Die Streuung des Prozesses wird über einen definierten Zeitraum automatisch berechnet. Die Streuung wird in Bezug zu den Aktionsbereichen oder -grenzen berechnet und in Verbindung mit dem Risikopotential wird eine Aktionsmeldung erzeugt. Die Aktionsmeldung wird dann abgesetzt. Dabei werden unter Anderem folgende Faktoren berücksichtigt: Messwerte, Streuung, Mittelwert, Aktions- Bereichsgrenzen, etc.

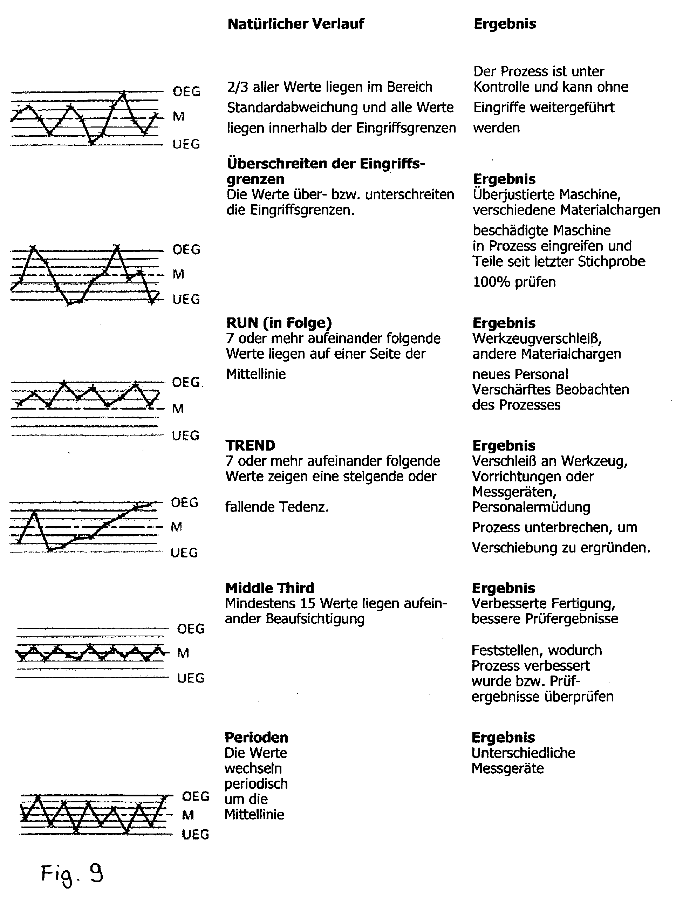

Zur Trendbegutachtung werden statistische Prozesskontroll-Regeln in das Regelwerk des vorliegenden Systems integriert. Hierzu siehe auch Fig. 9.

Systematische Abweichungen unterliegen Gesetzmäßigkeiten. Aus dem Verlauf der Messpunkte auf im Gesamtwertebereich lässt sich auf diese Gesetzmäßigkeiten zurück schließen. So spricht man von einem "Trend", wenn sieben Messpunkte eine wenigstens lineare Steigung in Richtung einer Grenze zeigen. Möglicherweise liegt ein stark zunehmender Werkzeugverschleiß vor, der bald eine Überschreitung einer Eingriffs- bzw. Warngrenze verursacht.

Eine Gesetzmäßigkeit ("Pattern") ist ein nicht zufälliger Kurvenverlauf, z. B. das periodische "Schwingen" um die Mittelwertlinie. Es kann zum Beispiel durch Temperaturschwankungen hervorgerufen sein, die in der Fertigung größere oder kleinere Teile verursachen.

Befinden sich 7 Messwerte ober- bzw. unterhalb der Mittelwertlinie, hat sich der Prozessmittelwert wahrscheinlich verschoben. Es wird von einem Lauf ("Run") gesprochen. Dieser Lauf kann zum Beispiel anzeigen, dass eine Werkzeugschneide einen Schaden erlitten hat und die Teile von nun an größer bzw. kleiner fertigt.

Die Eingriffsgrenzen sind also nicht die einzigen Anzeichen für potenzielle Probleme; die Anordnung der Messpunkte ist ebenfalls zu beachten. Liegen mehr als 90 % der erfassten Messwerte im mittleren Drittel des Bereichs zwischen den Eingriffsgrenzen oder weniger als 40 % der Punkte in diesem Drittel, ist ebenfalls davon auszugehen, dass ein systematischer (nicht zufälliger) Einfluss vorliegt.

Diese Gesetzmäßigkeiten fließen in die Festlegung der Bereiche bzw. deren Grenzen ein. Außerdem dienen sie zur Definition der Regeln. (Fig. 9)

Mit den statistischen Trendregeln kann ein Verhalten (Trend) des Prozesses im Toleranzbereich erkannt und ggf. visualisiert werden. Dieser Trend wird automatisch berechnet und in Verbindung mit den Aktionsfeldern und Risikoklassen bewertet und es werden Aktionsmeldungen (Anweisungen zur Prozessregelung) ausgegeben. Dabei werden unter Anderem folgende Faktoren berücksichtigt: Messwerte, Steigung, statistische Kenndaten, statische Regeln, Streuung etc.

### Regel-Faktoren:

Risikoklasse (A, B, oder C)
Werkzeugtechnologie (Akkuschrauber, Elektroschrauber, Druckluftschrauber ...)
Prozessprüfung (Weiterzugsmomentprüfung, etc.)
Prozessabsicherung (ja, Nein)

### Messwerte:

2 oder mehrere Messwerte über- oder unterschreiten eine Aktionsgrenze Mögliche Ursache:
Überjustierte Maschine, unterschiedliche Materialchargen, beschädigte Maschine oder Produkt

### Einzuleitende Maßnahmen:

Produktionswerkzeug auswechseln, 100% aller produzierten Teile seit letzter Stichprobe überprüfen

In Produktionsbetrieben sind heute meist fest vorgegebene Prüfrouten (zeitliche und inhaltliche Vorgabe für Prüfungen) vorhanden. Diese werden in der Regel nach einem statisch vorgegeben Zeitraster abgearbeitet.

Im Gegensatz dazu werden im vorliegenden System Prüfrouten automatisch berechnet und dynamisch generiert. So werden Aufwendungen für die Qualitätsüberwachung bei gesicherten Prozessen reduziert und bei ungesicherten Prozessen wesentlich erhöht.

Das Regelwerk für eine dynamische Prüfroute wird unter den Bedingungen des Prozesses entschieden. Der Nutzer legt im Konfigurationsmenü fest, wann und unter welchen Regeln Prüfungen durchgeführt werden sollen.

Läuft der Prozess innerhalb statistischer Regeln i.O. ab, dann wird der Prüfablauf so verändert, dass zwischen zwei Prüfungen ein längeres Zeitintervall verstreichen kann. Der Nutzer entscheidet dabei bei der Regelfestlegung im Konfigurationsmenü, welche Intervallverlängerung zulässig ist.

Je länger der Prozess innerhalb der i.O.-Grenzen abläuft, desto länger werden die Zeitintervalle zwischen zwei Prüfungen eingestellt. Allerdings gibt es eine Eingabe für eine intervallgrenze, bei deren Erreichen eine Prüfung erfolgen muss und eine Meldung abgesetzt wird, die eine Prüfung des Prozesses anstößt.

Da davon ausgegangen werden kann, dass die meisten der eingesetzten Prozesse prozessfähig sind, sie also innerhalb einer festgelegten Wahrscheinlichkeit i.O. sind, wird durch die dynamischen Regeln eine wesentliche Reduzierung des Prüfumfanges eintreten und eine nennenswerte Einsparung im Prüfaufwand ohne Qualitätseinbußen erfolgen.

Prozesse, die nicht auch statistisch i.O. sind, enthalten Fehler in ihrem Ablauf, die derzeit nur mit großem Aufwand und meistens erst nach längerer Zeit zufällig erkannt werden können. Diese nicht erkannten Risiken wirken sehr lange in einem Prozess und erzeugen sehr hohe Kosten. Diese unsicheren Prozesse belegt das vorliegende System durch den dynamischen Prüfplan mit verkürzten Zeitintervallen zwischen zwei Prüfungen und den angepassten Stichprobengrößen. Das heißt, der Prüfzyklus wird automatisch verkürzt. Im Konfigurationsmenü werden die Regeln für den Prüfablauf (und die Raten, nach denen sich das Prüfintervall verlängert / verkürzt) vorab fixiert.

Als Beispiele:
WENN 2 Werte über einer festzulegenden oder automatisch erststellten Warngrenze innerhalb von einer Woche liegen, DANN wird eine Prüfung des Prozesses angestoßen.
WENN 5 Werte innerhalb einer Woche außerhalb der Warngrenze liegen, DANN wird der Prüfzyklus um 50% verkürzt. Das heißt es werden eine Verdopplung der Prüfung vorgenommen.
WENN 2 Werte über oder unter einer Eingriffsgrenze (Aktionsgrenze) innerhalb von einer Woche liegen, DANN wird sofort eine Verdopplung der Prüfungen eingeleitet UND durch ein integriertes Expertensystem Maßnahmen vorgeschlagen, die zu einer Aktion auffordern, die den Prozess wieder in Kontrolle bringen soll.

Dieses Expertensystem besteht aus einer Vielzahl von Routinen, die vom Qualitätsverantwortlichen permanent durch detaillierte Eingaben erweitert werden können. Alle Abstellmaßnahmen der Qualitätsprobleme werden erfasst und automatisch dem Nutzer angeboten.

Auftretende Qualitätsveränderungen werden in dem vorliegenden System vollautomatisch erfasst und berechnet. Die Regelung erfolgt innerhalb einer sehr kurzen Zeitspanne und wirkt bereits frühzeitig im Entstehen einer Qualitätsabweichung entgegen. Dies führt dazu, dass die effektive Einsparung auch hier greift und der Gesamtumfang der Prozesskontrolle wesentlich reduziert wird.

Da im System erstmals alle Prozesse abgebildet werden können ist eine aufwandsgerechte Bedarfsplanung über Prüfkapazitäten dynamisch möglich. Somit können Personalkapazitäten für die Zukunft unter Berücksichtigung des laufenden Prozesses geplant werden. Ausfallzeiten werden durch das System berücksichtigt. Auch die Prüfmittelkapazität (benötigte Prüfmittel) kann geplant werden.

Das System gibt bei Erreichen der Warn- / Aktionsgrenzen durch die erfassten Messwerte spezifische Fehlercodes aus, die Maßnahmen zur Behebung des Problems z.B. Prüfaufwand bzw. Wartungsintervall (verringern / erhöhen), Reparatur oder Austausch des Werkzeugs einleiten, bedeuten. Fehlermeldungen können zusätzlich auch direkt an die Instandhaltungsinstanz und / oder den zuständigen Qualitätsverantwortlichen via SMS oder Email zur Kenntnisnahme/ Bearbeitung weitergeleitet werden. Durch die Qualitätsbeurteilung im laufenden Prozess soll ermöglicht werden den Prüfaufwand bzw. das Wartungsintervall des Produktionswerkzeugs dynamisch anzupassen.

Wenn die Qualität auch statistisch i.O. ist, also sowohl die Trendentwicklung, als auch die Einzelwerte der erfassten Messwerte i.O. sind, wird das System den Prüfaufwand bzw. das Wartungsintervall automatisch verringern (aufwandsorientierte Wartung / Reparatur).

Umgekehrt wird beim Erkennen von Qualitätsabweichungen (z.B. Werkzeugverschleiß) im Prozess der Prüfaufwand automatisch erhöht und eine Aktion zur Behebung des Problems eingeleitet.

Das vorliegende System erzeugt Reparaturanforderungen mit Reparaturzeitvorgabe und exakter Bezeichnung z.B. der Schraubstelle, spezifischer Fehlermeldung, Trendbeschreibung sowie der Reparaturmaßnahme. wird eine zeitnahe und kostengünstige Fehlerbehebung durch die zuständigen Verantwortlichen jederzeit gewährleistet und sichergestellt. Dabei wird die Anforderung zur Reparatur oder zur Wartung durch das vorliegende System durch die Information aus dem Qualitätsstatus des Prozesses (Maschinen- und Prozessfähigkeit) der Auslegung des Werkzeuges (in Bezug zur Gesamtleistung) und der mechanische Belastung an das Werkzeug erstellt. Das Einleiten der nötigen Schritte zur Reparatur des Werkzeugs bzw. Austausch durch ein identisches Werkzeug erfolgt unbedingt, das heißt ohne dass hier weitere Aktionen, zum Beispiel durch Personal, erforderlich wäre. Dem Reparaturpersonal werden durch ein Expertensystem in vergleichbarer Weise wie bei den Prüfrouten Maßnahmen vorgegeben, die zur Abarbeitung des Reparaturauftragesdienen um das Werkzeug gezielt und mit dem vom System geplanten Reparaturauftrag zu reparieren. Dieses Expertensystem besteht aus den gleichen Routinen, wie bei den dynamischen Prüfrouten, die vom Reparaturpersonal permanent mit Eingaben erweitert werden können. Dadurch gibt es Reparaturinformationen an die mit der Reparatur beauftragten Mitarbeiter. Diese Information (Qualitätsergebnisse, Fehlermeldung usw.) wird online in den Reparaturbereich übertragen. Durch die mögliche Automatisierung der Ersatzteilbestellung (Abrufe) im Fall eines Werkzeugdefektes kann die kostenintensive Ersatzteilhaltung (nicht benötigter) Ersatzteile vermieden werden.

Eine anwenderspezifische Dokumentation zur "Sicherstellung des Prozesses" mit Aufzeichnung der eingeleiteten Schritte von der Problementstehung bis zur erneuten Werkzeugfreigabe findet automatisch nach Abschluss des Reparaturvorgangs statt. Durch diesen Vorgang kann das zeitaufwendige und somit kostenintensive dokumentieren von Hand (eventuell auch fehlerbehaftet) "des Reparaturvorgangs" in Schicht - und Anlagenbücher entfallen. Des Weiteren kann eine Dokumentation "des gesamten Vorgangs "zur Archivierung im übergeordneten Leitsystem erfolgen.

Das vorgestellte System nimmt also Einfluss auf den Produktionsprozess mittels Daten, die unmittelbar vor deren Bewertung / Bereichseinteilung erfasst wurden und gleich darauf wieder in den Produktionsprozess und dessen Qualität einfließen. Dies ist ein wesentlicher Unterschied im Verhältnis zu bisherigen Systemen, bei denen die erfassten Daten zum einen nicht vollständig sind und zum anderen bereits veraltet sind, wenn sie ausgewertet werden. In wie weit eine Einflussnahme auf den laufenden Produktionsprozess basierend auf den bereits "veralteten" Daten sinnvoll oder überhaupt möglich ist, hängt stark von den einzelnen Umständen ab.

Heutige Fertigungssysteme liefern zwar Rückmeldungen an ein einzelnes Werkzeug / Bearbeitungssystem zurück. Dies mag im Einzelfall zu einem unmittelbaren Eingriff in den Produktionsbetrieb führen. Als Beispiel sei hier eine fehlende Schraube genannt, die von der Steuerung als fehlend erkannt wird und zu einem Sperren des Fertigungstaktes führt. Dabei können nur von dem Werkzeug / Bearbeitungssystem unmittelbar gelieferten Messgrößen berücksichtigt werden. In der Mehrzahl aller Fertigungsabläufe fehlen jedoch Messwerte gänzlich. Weitergehende Einflussgrößen (Bauteileinflüsse, z.B. Setzverhalten, Varianten der Bauteilchargen, nicht gemessene physikalische Größen z.B. Reibwerte, Defekte im Werkzeug / in der Messtechnik) finden keine Beachtung bei der Entscheidung. Im Gegensatz dazu erfasst und berücksichtigt das vorliegende System bei der Entscheidung für eine bestimmte Fertigungsstelle auch Messwerte / Messgrößen anderer Fertigungsstellen und betrachtet den momentanen Messwert im Kontext der Regeln, die weitergehende und umfassende Faktoren mit dem Messwert verknüpfen und Einfluss auf die Fertigung nehmen. Im Einzelfall führt dies dazu, dass ein erfasster Messwert in bekannten Systemen eine Produktionslinie nicht anhält. Mit dem vorliegenden System führt jedoch durch die Verknüpfung der Messwerte mit den Faktoren in den Regeln ein Messwert zur Behebung eines Fehlers in der Fertigung sowie zur Vermeidung von Fehlern in der Zukunft.

## Patentansprüche

1. Kontroll- und Leitsystem für Fertigungs- und Qualitätssicherungsprozesse in Produktionslinien mit mehreren Bearbeitungsstationen und Werkzeugen (14) zum Ausführen jeweiliger Qualitätssicherungs- und Fertigungsvorgänge , das Kontroll-und Leitsystem aufweisend eine Auswertungsstation (30), eine Dokumentations-ProgrammKomponente, eine Klassifizierungs-und Auswertungs-Programmkomponente und einem Sender/Empfünger (32), wobei die Bearbeitungsstationen und Werkzeuge unterschiedliche Datenquellen wie Elektroschrauber, Drehmoment-Prüfschlüssel oder Prüfgerät zur Erfassung der Maschinenfähigkeit bilden und jeweils wenigstens
- einen Sensor (16) zur Erfassung von Messwerten wenigstens einer Messgröße des Qualitätssicherungs- oder Fertigungsvorgangs an einem Produkt, und
- einen Sender/Empfänger (22) zum Aussenden in dem Qualitätssicherungs- oder Fertigungsvorgang erfasster Messwerte unmittelbar nach deren Erfassen zumindest in Nahezu-Echtzeit über eine Kommunikationsstrecke an die Auswertungsstation und zum Empfangen von Rückmeldungen von der Auswertungsstation
aufweisen, und wobei die Auswertungsstation einen Datenprozessor und einen Datenspeicher hat, und der Auswertungsstation
- die Dokumentations-Programmkomponente, um im Qualitätssicherungs- oder Fertigungsvorgang erfasste Messwerte wenigstens einer Messgröße strukturiert zu dokumentieren,
- die Klassifizierungs- und Auswertungs-Programmkomponente, um unmittelbar nach dem Empfang der Messwerte über die Kommunikationsstrecke zumindest in Nahezu-Echtzeit diese zu klassifizieren als
(i) außerhalb einer oberen oder unteren Toleranzgrenze, oder
(ii) zwischen der oberen oder unteren Toleranzgrenze und einer ersten Aktionsgrenze, oder
(iii) zwischen der oberen oder unteren ersten Aktionsgrenze und einem Sollwert liegend,
und als
(i) in einem Alarmbereich,
(ii) in einem Melde-/Aktionsbereich, oder
(iii) in einem Sollbereich liegend auszuwerten und um abhängig von deren Klassifizierung und Auswertung wenigstens eine Prozessbeeinflussungs- oder Prozessbenachrichtigungsmaßnahme abzuleiten,
und
- der Sender/Empfänger (32) zugeordnet sind, um zumindest in Nahezu-Echtzeit über die Kommunikationsstrecke eine entsprechende Nachricht mit der jeweiligen abgeleiteten Prozessbeeinflussungs- oder Prozessbenachrichtigungsmaßnahme an die jeweilige Bearbeitungsstation oder das jeweilige Werkzeug und/oder eine Kontrollstation abzugeben,
**dadurch gekennzeichnet dass** die Klassifizierung und Auswertung je nach Risikoklassifizierung des an der jeweiligen Bearbeitungsstation ausgeführten Qualitätssicherungs- oder Fertigungsvorgangs anhand einer Einzelwertbeurteilung oder einer Langzeitbetrachtung von Messwerten aus der Vergangenheit erfolgt.

2. Kontroll- und Leitsystem für Fertigungs- und Qualitätssicherungsprozesse nach Anspruch 1, wobei die Klassifizierungs- und Auswertungs-Programmkomponente die erfassten Messwerte der wenigstens einen Messgröße in Bezug zu benutzerdefinierten und für die jeweilige Bearbeitungsstationen oder Werkzeuge spezifischen Regeln setzt.

3. Kontroll- und Leitsystem für Fertigungs- und Qualitätssicherungsprozesse nach Anspruch 2, wobei die benutzerdefinierten Regeln aus einer vorgegebenen Klasse von Regeln auswählbar und veränderbar sind.

4. Kontroll- und Leitsystem für Fertigungs- und Qualitätssicherungsprozesse nach einem der vorhergehenden Ansprüche 2 oder 3, wobei in jeder der Regeln ein oder mehrere Prozess-Parameter zu einem ersten Prozess-Einflussfaktor verknüpft sind.

5. Kontroll- und Leitsystem für Fertigungs- und Qualitätssicherungsprozesse nach einem der vorhergehenden Ansprüche 2 bis 4, wobei in jeder der Regeln ein oder mehrere Prozess-Bewertungsfaktoren zu einem zweiten Prozess-Einflussfaktor verknüpft sind.

6. Kontroll- und Leitsystem für Fertigungs- und Qualitätssicherungsprozesse nach einem der vorhergehenden Ansprüche 2 bis 5, wobei in jeder der Regeln ein oder mehrere Wertebereiche festgelegt sind, in die ein oder mehrere der Messwerte nach ihrem Eintreffen in der Auswertungsstation einzuordnen sind.

7. Kontroll- und Leitsystem für Fertigungs- und Qualitätssicherungsprozesse nach einem der vorhergehenden Ansprüche 2 bis 6, wobei in jeder der Regeln eine oder mehrere Prozessbeeinflussungs- oder Prozessbenachrichtigungsmaßnahmen festgelegt sind, die in Abhängigkeit von jeweils erfassten Messwerten wenigstens einer Messgröße abzugeben sind.

8. Kontroll- und Leitsystem für Fertigungs- und Qualitätssicherungsprozesse nach einem der vorhergehenden Ansprüche, wobei die Klassifizierungs- und Auswertungs-Programmkomponente gemäß den spezifischen Regeln die erfassten Messgrößen mit den ersten und/oder zweiten Prozess-Einflussfaktoren verknüpft, und ermittelt, in welchen der Wertebereiche ein oder mehrere erfasste Messwerte einzuordnen sind, um abhängig von der Bereichseinordnung eine oder mehrere entsprechende Nachrichten mit jeweiligen abgeleiteten Prozessbeeinflussungs- oder Prozessbenachrichtigungsmaßnahmen an die jeweilige Bearbeitungsstation oder das jeweilige Werkzeug und/oder die Kontrollstation abzugeben.

9. Kontroll- und Leitsystem für Fertigungs- und Qualitätssicherungsprozesse nach Anspruch 4 wobei die Prozess-Parameter Konstanten umfassen, wie
- Sollwerte etwa in Form von Drehmoment, Drehwinkel, Länge, oder Füllstand,
- Toleranzen der Sollwerte,
- Prüfparameter etwa in Form von Drehmoment, Drehwinkel, Länge, Füllstand,
- Materialkonstanten etwa in Form von Reibwert, Härte, Dimensionen, E-Modul,
- Prüf-Häufigkeit, und/oder
- Werkzeugtyp in Form von Art, Ausführungtyp, oder dessen Funktionsweise.

10. Kontroll- und Leitsystem für Fertigungs- und Qualitätssicherungsprozesse nach Ansprüch 5, wobei die Prozess-Bewertungsfaktoren Faktoren umfassen, wie
- Risiko-Klassifizierung etwa in Form von Bedeutung der Fertigungsstelle,
- Know-How-Daten, und/oder
- Risiko-Potential in Form von Rest-Risiko.

11. Kontroll- und Leitsystem für Fertigungs- und Qualitätssicherungsprozesse nach Ansprüch 6, wobei die Wertebereiche Bereiche umfassen, wie Aktionsbereiche, in denen Messgrößen liegen können, wie einen In-Ordnung-Bereich, einen oder mehrere Meldungsbereiche, einen oder mehrere Warnbereiche, einen Über-In-Ordnung-Bereich, einen oder mehrere Zerstörungs-, Dehnungs-, und/oder Verformungsbereiche, einen Unter-In-Ordnung-Bereich, einen oder mehrere im Toleranzbereich oberhalb des Sollwerts liegende Bereiche, und/oder einen oder mehrere im Toleranzbereich unterhalb des Sollwerts liegende Bereiche.

12. Kontroll- und Leitsystem für Fertigungs- und Qualitätssicherungsprozesse nach einem der vorhergehenden Ansprüche, wobei die Prozessbenachrichtigungs- und/oder Prozessbeeinflussungsmaßnahmen
- eine oder mehrere Trendmeldungen, wonach der Fertigungsvorgang sich verändert aber noch in Ordnung ist,
- eine oder mehrere Meldungen von sporadischen Ausreißern der Messwerte,
- eine oder mehrere Meldungen zur Einzelkontrolle und/oder zur Nacharbeit am Produkt
- eine oder mehrere Meldungen zum Anpassen des Prüfintervall am Produkt oder an den Bearbeitungsstationen und/oder Werkzeugen,
- Instandhaltung/Wartung/Austausch des Betriebsmittels veranlassen bevor n.i.O.-Produkte die Produktionslinie verlassen
- Umfassende Überprüfung der noch nicht verbauten Bauteile veranlassen
- Stopp der Produktionslinie
- Auslieferungsstopp der betroffenen Charge veranlassen
- Ein oder mehrere Ersatzteile für die Bearbeitungsstationen und/oder Werkzeuge oder das Produkt anliefern
umfassen.

13. Kontroll-und Leitsystem für Fertigungsprozesse nach einem der vorhergehenden Ansprüche, bei dem die Prozessbeeinflussungs- oder Prozessbenachrichtigungsmaßnahmen
- eine Rückmeldung an die jeweilige Bearbeitungsstation oder das jeweilige Werkzeug,
- eine elektronische Nachricht an eine Kontrollstation,
- ein Abschaltsignal an die Produktionslinie, und/oder
- Veränderungen der Regeln
umfassen.

14. Kontroll-und Leitsystem für Fertigungsprozesse nach einem der vorhergehenden Ansprüche, bei dem die Kommunikationsstrecke zwischen Bearbeitungsstation oder dem Werkzeug und der Auswertungsstation eine drahtlose und/oder kabelgebundene Kommunikationsstrecke ist.

15. Kontroll-und Leitsystem für Fertigungsprozesse nach Anspruch 1, wobei der Auswertungsstation eine Visualisierungs-Programmkomponente zum automatischen Anzeigen im Montagevorgang erfasster Messgrößen zugeordnet ist, wobei solche Parameter im Bezug auf eine oder mehrere Montagestellen angezeigt werden, die durch die Klassifizierungs- und Auswertungs-Programmkomponente als ein Kriterium erfüllend erkannt werden.

## Claims

1. A control and guide system for production and quality assurance processes in production lines comprising a plurality of processing stations and tools (14) for executing respective quality assurance and production processes, the control and guide system comprising an analysis station (30), a documentation program component, a classification and analysis program component and a transceiver (32), wherein the processing stations and tools define different data sources, such as an electric screw driver, a torque verification key or a test apparatus for machine capability detection, and comprise each at least
- one sensor (16) for detecting on a product measurement values of at least one measurement quantity of the quality assurance or production process, and
- a transceiver (22) for transmitting measurement values detected in the quality assurance or production process, immediately after said measurement values have been detected in at least almost real time, via a communication path to the analysis station and for receiving feedback signals from the analysis station,
and wherein the analysis station includes a data processor and a data memory, and the analysis station has associated therewith
- the documentation program component so as to document in a structured manner measurement values of at least one measurement quantity which have been detected in the quality assurance or production process,
- the classification and analysis program component so as to classify the measurement values, immediately after said measurement values have been received via the communication path in at least almost real time, as
(i) lying not within an upper or lower tolerance limit, or
(ii) lying between the upper or lower tolerance limit and a first action limit, or
(iii) lying between the upper or lower first action limit and a target value,
and so as to analyze them as
(i) lying in a warning range,
(ii) in a notifying/action range, or
(iii) in a target range, and so as to derive, depending on the classification and analysis of these measurement values, at least one process influencing or process notifying measure,
and
- the transceiver (32) so as to transmit via the communication path, in at least almost real time, a relevant message with the respective derived process influencing or process notifying measure to the processing station in question or the tool in question and/or a control station,
**characterized in that** the classification and analysis takes place depending on the risk classification of the quality assurance or production process at the respective processing station on the basis of an individual value assessment or a long-term observation of measurement values from the past.

2. A control and guide system for production and quality assurance processes according to claim 1, wherein the classification and analysis program component correlates the detected measurement values of the at least one measurement quantity with user-defined rules that are specific to the respective processing stations or tools.

3. A control and guide system for production and quality assurance processes according to claim 2, wherein the user-defined rules can be selected from a predetermined class of rules and can be modified.

4. A control and guide system for production and quality assurance processes according to one of the preceding claims 2 or 3, wherein in each of the rules one or a plurality of process parameters is linked so as to obtain a first process influencing factor.

5. A control and guide system for production and quality assurance processes according to one of the preceding claims 2 to 4, wherein in each of the rules one or a plurality of process assessment factors are linked so as to obtain a second process influencing factor.

6. A control and guide system for production and quality assurance processes according to one of the preceding claims 2 to 5, wherein in each of the rules one or a plurality of ranges of values are specified, into which one or a plurality of the measurement values has to be classified after having arrived at the analysis station.

7. A control and guide system for production and quality assurance processes according to one of the preceding claims 2 to 6, wherein in each of the rules one or a plurality of process influencing or process notifying measures are specified, which have to be transmitted depending on respective detected measurement values of at least one measurement quantity.

8. A control and guide system for production and quality assurance processes according to one of the preceding claims, wherein the classification and analysis program component links the detected measurement quantities to the first and/or second process influencing factors according to the specific rules and ascertains into which of the ranges of values one or a plurality of detected measurement values has to be classified so as to transmit, depending on the classification into a respective range, one or a plurality of relevant messages with respective derived process influencing or process notifying measures to the processing station in question or the tool in question and/or the control station.

9. A control and guide system for production and quality assurance processes according to claim 4, wherein the process parameters comprise constants, such as
- target values, e.g. in the form of torque, rotation angle, length or filling level,
- tolerances of the target values,
- test parameters, e.g. in the form of torque, rotation angle, length, filling level,
- material constants, e.g. in the form of coefficient of friction, hardness, dimensions, modulus of elasticity,
- test frequency, and/or
- type of tool in the form of nature, design type or mode of operation thereof.

10. A control and guide system for production and quality assurance processes according to claim 5, wherein the process assessment factors comprise factors, such as
- risk classification, e.g. in the form of the importance of the production site,
- know-how data, and/or
- risk potential in the form of residual risk.

11. A control and guide system for production and quality assurance processes according to claim 6, wherein the ranges of values comprise ranges, such as action ranges, in which measurement quantities may lie, e.g. an OK range, one or a plurality of notification ranges, one or a plurality of warning ranges, a super-OK range, one or a plurality of destruction, elongation and/or deformation ranges, a sub-OK range, one or a plurality of ranges lying above the target value in the tolerance range, and/or one or a plurality of ranges lying below the target value in the tolerance range.

12. A control and guide system for production and quality assurance processes according to one of the preceding claims, wherein the process notifying and/or process influencing measures comprise
- one or a plurality of trend reports according to which the production process changes but is still okay,
- one or a plurality of reports on sporadic outliers of the measurement values,
- one or a plurality of reports on individual examination and/or reworking of the product,
- one or a plurality of reports for adapting the test interval at the product or at the processing stations and/or tools,
- causing maintenance/servicing/exchange of the production equipment before not-OK products leave the production line,
- causing comprehensive checking of the not yet mounted components,
- stopping the production line,
- causing the delivery of the respective batch to be stopped,
- delivering one or a plurality of spare parts for the processing stations and/or tools or the product.

13. A control and guide system for production processes according to one of the preceding claims, wherein the process influencing or process notifying measures comprise
- a feedback to the respective processing station or the respective tool,
- an electronic message to a control station,
- a shutdown signal to the production line, and/or
- amendments to the rules.

14. A control and guide system for production processes according to one of the preceding claims, wherein the communication path between the processing station or the tool and the analysis station is a wireless and/or wired communication path.

15. A control and guide system for production processes according to claim 1, wherein the analysis station has associated therewith a visualization program component for automatically displaying measurement values detected in the mounting process, wherein the parameters displayed with respect to one or a plurality of mounting sites are parameters that are recognized by the classification and analysis program component as fulfilling a criterion.

## Revendications

1. Système de contrôle et de commande pour des processus de fabrication et d'assurance qualité dans des lignes de fabrication avec plusieurs postes de traitement et/ou outils (14) pour effectuer les opérations de fabrication et d'assurance qualité respectives, ledit système de contrôle et de commande présentant un poste d'évaluation (30), un composant de logiciel de documentation, un composant de logiciel de classification et d'évaluation et un émetteur/récepteur (32), lesdits postes de traitement et outils constituant différentes sources de données, telles que tournevis électrique, clé dynamométrique de contrôle ou appareil de contrôle pour la détection de la capabilité machine, et présentant chacun au moins
- un capteur (16) pour enregistrer des valeurs de mesure d'au moins une grandeur de mesure de l'opération de fabrication ou d'assurance qualité sur un produit, et
- un émetteur/récepteur (22) pour envoyer audit poste d'évaluation (30), pour le moins à peu près en temps réel et par l'intermédiaire d'une ligne de communication, des valeurs de mesure enregistrées au cours de l'opération de fabrication ou d'assurance qualité, immédiatement après leur enregistrement, et pour recevoir des retours d'information du poste d'évaluation,
et le poste d'évaluation possédant un processeur de données et une mémoire de données, et au poste d'évaluation étant associés
- le composant de logiciel de documentation pour documenter de manière structurée des valeurs de mesure d'au moins une grandeur de mesure enregistrées au cours de l'opération de fabrication ou d'assurance qualité,
- le composant de logiciel de classification et d'évaluation pour classer, immédiatement après réception et pour le moins à peu près en temps réel, des valeurs de mesure transmises via ladite ligne de communication en tant que valeurs situées
(i) en dehors d'une limite de tolérance supérieure ou inférieure, ou
(ii) entre la limite de tolérance supérieure ou inférieure et une première limite d'action, ou
(iii) entre la première limite d'action supérieure ou inférieure et une valeur théorique,
et pour évaluer celles-ci en tant que valeurs situées
(i) dans une plage d'alarme,
(ii) dans une plage d'alarme/d'action ou
(iii) dans une plage théorique, et pour en déduire, en fonction de leur classification et évaluation, au moins une mesure d'influence de processus ou une mesure d'information de processus,
et
- l'émetteur/récepteur (32) pour délivrer au poste de traitement concerné ou à l'outil concerné et/ou à un poste de contrôle, pour le moins à peu près en temps réel et via la ligne de communication, un message correspondant avec ladite mesure d'influence de processus ou mesure d'information de processus respectivement déduite,
**caractérisé en ce que** la classification et l'évaluation sont à chaque fois effectuées après classification des risques liés à l'opération d'assurance qualité ou de fabrication effectuée sur le poste de traitement concerné et appréciés sur la base d'une valeur individuelle ou d'un suivi dans le temps des valeurs de mesure enregistrées par le passé.

2. Système de contrôle et de commande pour des processus de fabrication et d'assurance qualité selon la revendication 1, ledit composant de logiciel de classification et d'évaluation établissant un rapport entre les valeurs de mesure d'au moins une grandeur de mesure enregistrées et des règles personnalisées et spécifiques aux postes de traitement ou outils concernés.

3. Système de contrôle et de commande pour des processus de fabrication et d'assurance qualité selon la revendication 2, lesdites règles personnalisées étant sélectionnables dans une classe prédéfinie et pouvant être modifiées.

4. Système de contrôle et de commande pour des processus de fabrication et d'assurance qualité selon l'une des revendications précédentes 2 ou 3, un lien étant établi dans chacune des règles entre un ou plusieurs paramètres de processus et un premier facteur d'influence de processus.

5. Système de contrôle et de commande pour des processus de fabrication et d'assurance qualité selon l'une des revendications précédentes 2 à 4, un lien étant établi dans chacune des règles entre un ou plusieurs facteurs d'évaluation de processus et un deuxième facteur d'influence de processus.

6. Système de contrôle et de commande pour des processus de fabrication et d'assurance qualité selon l'une des revendications précédentes 2 à 5, une ou plusieurs plages, dans lesquelles sont à classer une ou plusieurs valeurs de mesure après leur arrivée au poste d'évaluation, étant établies dans chacune des règles.

7. Système de contrôle et de commande pour des processus de fabrication et d'assurance qualité selon l'une des revendications précédentes 2 à 6, une ou plusieurs mesures d'influence de processus ou d'information de processus à délivrer en fonction des valeurs de mesure d'au moins une grandeur de mesure enregistrées étant établis dans chacune des règles.

8. Système de contrôle et de commande pour des processus de fabrication et d'assurance qualité selon l'une des revendications précédentes, le composant de logiciel de classification et d'évaluation établissant, conformément aux règles spécifiques, un lien entre les grandeurs de mesure enregistrées et les premiers et/ou deuxièmes facteurs d'influence de processus, et déterminant dans quelles plages de valeurs une ou plusieurs valeurs de mesure sont à classer pour délivrer au poste de traitement concerné ou à l'outil concerné et/ou au poste de contrôle, en fonction de la catégorie de plages concernée, un ou plusieurs messages avec les mesures d'influence de processus ou d'information de processus.

9. Système de contrôle et de commande pour des processus de fabrication et d'assurance qualité selon la revendication 4, lesdits paramètres de processus comprenant des constantes, telles que
- valeurs théoriques p. ex. sous forme de couple, d'angle de rotation, longueur ou niveau de remplissage,
- tolérances des valeurs théoriques,
- paramètres de contrôle p. ex. sous forme de couple, d'angle de rotation, longueur, niveau de remplissage,
- constantes de matériaux p. ex. sous forme de coefficient de friction, dureté, dimensions, module d'élasticité,
- fréquence de contrôle, et/ou
- type d'outil, tel que modèle, mode de réalisation ou mode de fonctionnement.

10. Système de contrôle et de commande pour des processus de fabrication et d'assurance qualité selon la revendication 5, les facteurs d'évaluation de processus comprenant des facteurs, tels que
- classification des risques p. ex. d'après l'importance du poste de fabrication
- données en matière de know-how, et/ou
- le potentiel de risque sous forme de risque résiduel.

11. Système de contrôle et de commande pour des processus de fabrication et d'assurance qualité selon la revendication 6, les plages de valeurs comprenant des plages, telles que des plages d'action dans lesquelles peuvent se situer des grandeurs de mesure, telles qu'une plage correcte, une ou plusieurs plages de signalisation, une ou plusieurs plages d'alarme, une plage correcte supérieure, une ou plusieurs plages de destruction, d'étirement et/ou de déformation, une plage correcte inférieure, une ou plusieurs plages situées en dessus de la valeur théorique dans la fourchette des tolérances, et/ou une ou plusieurs plages situées en dessous de la valeur théorique dans la fourchette des tolérances.

12. Système de contrôle et de commande pour des processus de fabrication et d'assurance qualité selon l'une des revendications précédentes, les mesures d'information de processus et/ou d'influence de processus comprenant
- un ou plusieurs messages "tendance" comme quoi il y a modification de l'opération de fabrication qui est cependant encore correcte,
- un ou plusieurs messages concernant l'apparition sporadique de valeurs de mesure aberrantes,
- un ou plusieurs messages pour la réalisation de contrôles individuels et/ou de retouches sur le produit
- un ou plusieurs messages pour l'adaptation de l'intervalle de contrôle sur le produit ou aux postes de traitement et/ou outils,
- faire procéder à l'entretien/maintenance/renouvellement du matériel de fabrication avant que des produits incorrects quittent la ligne de fabrication
- faire procéder à un contrôle vaste et complet des pièces encore non assemblées
- arrêt de la ligne de fabrication
- faire stopper la livraison de la charge concernée
- livrer une ou plusieurs pièces détachées pour les postes de traitement et/ou les outils ou le produit.

13. Système de contrôle et de commande pour des processus de fabrication selon l'une des revendications précédentes, dans le cadre duquel les mesures d'influence de processus ou d'information de processus comportent
- un retour d'information au poste de traitement concerné ou à l'outil concerné,
- un message électronique à un poste de contrôle,
- un signal d'arrêt à la ligne de fabrication, et/ou
- des modifications de règle.

14. Système de contrôle et de commande pour des processus de fabrication selon l'une des revendications précédentes, dans le cadre duquel la ligne de communication entre le poste de traitement ou l'outil et le poste d'évaluation consiste en une ligne de communication sans fil et/ou par câble.

15. Système de contrôle et de commande pour des processus de fabrication selon la revendication 1, un composant de logiciel de visualisation pour l'affichage automatique des grandeurs de mesure enregistrées au cours de l'opération de montage est associé au poste d'évaluation, les paramètres affichés en rapport avec une ou plusieurs stations de montage étant ceux qui sont reconnus comme satisfaisant à un critère par le composant de logiciel de classification et d'évaluation.
